# EUROPÄISCHE PATENTSCHRIFT

(11) **EP 3 218 155 B1**
(45) Veröffentlichungstag und Bekanntmachung des Hinweises auf die Patenterteilung: **18.03.2020**
(21) Anmeldenummer: 14799397.6
(22) Anmeldetag: 13.11.2014
(51) Int. Cl.: B29C 37/00, B29C 67/00, B05D 3/00

(54) **VERFAHREN ZUR HERSTELLUNG VON KUNSTSTOFFTEILEN MIT LACKIERTER OBERFLÄCHE, MONOFILER FADEN ZUR VERWENDUNG GEMÄSS DIESEM VERFAHREN UND VERWENDUNG DES DAMIT HERGESTELLTEN KUNSTSTOFFTEILS**
METHOD FOR THE PRODUCTION OF PLASTIC PARTS HAVING A COATED SURFACE, MONOFILAMENT THREADS FOR USE ACCORDING TO SAID METHOD, AND USE OF THE PLASTIC PART PRODUCED BY SAME
PROCÉDÉ DE FABRICATION DE PIÈCES EN MATIÈRE PLASTIQUE POURVUES D'UNE SURFACE LAQUÉE, MONOFILAMENT POUR UNE UTILISATION CONFORMÉMENT À CE PROCÉDÉ ET UTILISATION DE L'ÉLÉMENT EN MATIÈRE PLASTIQUE AINSI FABRIQUÉ

(43) Veröffentlichungstag der Anmeldung: 20.09.2017
(73) Patentinhaber: Barlog Plastics GmbH, 51491 Overath (DE)
(72) Erfinder: BARLOG, Frank, 51789 Lindlar (DE); BARLOG, Werner, 51766 Engelskirchen (DE)
(74) Vertreter: Wagner Albiger & Partner Patentanwälte mbB
(86) Internationale Anmeldenummer: PCT/EP2014/074540
(87) Internationale Veröffentlichungsnummer: WO 2016/074735

(56) Entgegenhaltungen:
- EP-A1- 1 825 930
- WO-A1-2007/065998
- US-A1- 2014 328 964

## Beschreibung

Die Erfindung betrifft ein Verfahren zur Herstellung von Kunststoffteilen mit lackierter Oberfläche, wobei das Kunststoffteil aus einer thermoplastischen Formmasse geformt und nachfolgend eine Lackschicht auf die Oberfläche des Kunststoffteiles aufgebracht wird und wobei als thermoplastische Formmasse eine magnetisierbare Polymerzusammensetzung eingesetzt ist und die Formmasse während oder nach der Formung des Kunststoffteiles bereichsweise durch Anlegen eines Magnetfeldes magnetisiert wird und in einem nachfolgenden Schritt ein magnetisch orientierbare Partikel enthaltender Lack zur Ausbildung der Lackschicht auf die Oberfläche des geformten Kunststoffteiles aufgebracht wird.

Ein solches Verfahren ist aus der EP 1 825 930 A1 bekannt. Nach diesem Verfahren hergestellte Kunststoffteile mit lackierter Oberfläche finden mannigfaltige Anwendung, z. B. als Gehäuseteile von Maschinen oder Apparaten, etwa Mobiltelefonen. Die Herstellung der Kunststoffteile erfolgt dabei im Extrusions- oder Spritzgußverfahren.

Nachteilig bei dem bekannten Verfahren ist es, dass dir Herstellung der zunächst noch unlackierten Kunststoffteile im Extrusions- und Spritzgußverfahren einen hohen baulichen Aufwand für die entsprechenden Extrusions- oder Spritzgußanlagen und entsprechende Werkzeuge erfordert, wodurch sich jedoch der Herstellungsaufwand und damit die Herstellungskosten erhöhen und allenfalls für hohe Stückzahlen und Serienfertigung vertretbar sind, währen die Ausbildung von individuellen Einzelteilen oder Kleinserien wie auch Einzelmustern unverhältnismäßig und nicht praktikabel ist.

Aus der US 2014/0328964 A1 ist ferner ein 3D-Druckverfahren mit einem magnetische Füllstoffe enthaltenden monofilen Faden bekannt.

Aufgabe der vorliegenden Erfindung ist es daher, ein Verfahren zur Herstellung von Kunststoffteilen mit lackierter Oberfläche vorzuschlagen, welches auf besonders einfache und damit wirtschaftliche Weise die Erstellung von Effektlackierungen und/oder nicht zerstörungsfrei entfernbaren Beschriftungen auf derartigen Kunststoffteilen ermöglicht.

Zur Lösung der gestellten Aufgabe wird erfindungsgemäß ein Verfahren gemäß den Merkmalen des Patentanspruches 1 vorgeschlagen.

Vorteilhafte Ausgestaltungen und Weiterbildungen des erfindungsgemäßen Verfahrens sind Gegenstand der Unteransprüche.

Das erfindungsgemäße Verfahren beruht darauf, dass aus der thermischen Formmasse zunächst ein magnetisierbarer monofiler Faden extrudiert wird und der Faden in einem 3D-Drucker zu dem Kunststoffteil geformt wird. In an sich bekannter Weise kann die Formmasse während oder nach der Formung des Kunststoffteiles bereichsweise durch Anlegen eines Magnetfeldes magnetisiert werden und in einem nachfolgenden Schritt ein magnetisch orientierbare Partikel enthaltender Lack zur Ausbildung der Lackschicht auf die Oberfläche des geformten Kunststoffteiles aufgebracht werden.

3D-Drucker zur Verarbeitung eines monofilen Fadens zu einem nahezu beliebigen Kunststoffteil sind vielfältig bekannt, wozu nur beispielhaft auf die DE 20 2014 103023 U1 verwiesen wird.

Mit anderen Worten wird zunächst ein magnetisierbarer monofiler Faden aus dem Basispolymer und einer für die Magnetisierung ausreichenden Menge an Ferritmaterial extrudiert und unmittelbar oder nach Zwischenlagerung einem geeigneten 3D-Drucker zugeführt, welcher das Roh-Kunststoffteil in unlackiertem Zustand aus dem monofilen Faden nach bekannten Verfahren formt. Während des Formens oder in einem der Formung nachfolgenden Schritt wird sodann ein Magnetfeld angelegt, welches eine Magnetisierung der das Kunststoffteil ausbildenden Polymerzusammensetzung in den Bereichen bewirkt, in denen später eine Effektlackierung oder eine Beschriftung sichtbar werden soll. Durch das Anlegen eines Magnetfeldes wird demgemäß in der magnetisierbaren Polymerzusammensetzung bereichsweise, nämlich in den Bereichen, in denen eine Effektlackierung oder eine Beschriftung stattfinden soll, eine entsprechende Magnetisierung bewirkt.

Sodann wird in einem zweiten, der Herstellung des Kunststoffteiles nachfolgenden Schritt ein magnetisch orientierbare Partikel enthaltender Lack zur Ausbildung der Lackschicht auf die Oberfläche des geformten Kunststoffteiles aufgebracht. Infolge der zuvor bewirkten bereichsweisen Magnetisierung des Kunststoffteiles werden die magnetisch orientierbaren Partikel innerhalb des aufgebrachten Lackes entsprechend orientiert und agglomerieren im Bereich des aufgebrachten Magnetfeldes, solange die Lackschicht noch nicht getrocknet und ausgehärtet ist.

Nach dem Trocknen der Lackschicht zeigt sich sodann innerhalb der Lackschicht aufgrund der Orientierung der magnetisierbaren Partikel des Lackes die gewünschte Effektlackierung oder Beschriftung, deren Farbgebung von der Einfärbung der im Lack enthaltenen magnetisch orientierbaren Partikel und der Lackfarbe abhängig ist. Auf diese Weise wird ein im Innern der Lackschicht erzielter, jedoch von außen sichtbarer, aber nicht von außen entfernbarer Effekt erzielt, dessen Gestaltung ausschließlich von der zuvor im Kunststoffteil erfolgten Magnetisierung abhängt.

Es hat sich im Rahmen der Erfindung gezeigt, dass auf diese Weise Effektlackierungen mit hologrammähnlichem Erscheinungsbild oder auch Beschriftungen oder Logos etc. innerhalb der Lackschicht erzeugt werden können, wodurch sich eine neuartige Oberfläche von derartigen Kunststoffteilen ergibt, die vielfältigsten Anwendungsfeldern offensteht.

Durch den erfindungsgemäß vorgeschlagenen Zwischenschritt der Erstellung eines monofilen Fadens aus der magnetisierbaren Polymermasse und Formung zu dem Kunststoffteil mittels eines den monofilen Faden verarbeitetenden 3D-Druckers können auch individuelle Einzelteile oder Kleinserien kostengünstig und einfach unmittelbar aus entsprechenden Zeichnungsdaten gedruckt und mit einer Effektlackierung versehen werden.

Die Magnetisierung der das Kunststoffteil ausbildenden Polymerzusammensetzung kann bereits während der Ausbildung des Kunststoffteiles bewirkt werden, beispielsweise innerhalb des 3D-Druckers.

Selbstverständlich ist es auch möglich, nach dem Formen der Kunststoffteile in einer separaten Magnetisierstation die gewünschte bereichsweise Magnetisierung vorzunehmen, so dass auf handelsübliche 3D-Drucker zurückgegriffen werden kann.

Ein weiterer wesentlicher Vorteil des erfindungsgemäßen Verfahrens ist es, dass die Herstellung des Kunststoffteiles und dessen Magnetisierung vollkommen unabhängig von dem späteren Lackauftrag erfolgen kann.

Es wird vorgeschlagen, dass in einem dem bereichsweisen Magnetisieren und dem nachfolgenden Aufbringen der Lackschicht vorgelagerten Schritt die Formmasse während der Formung des Kunststoffteiles zunächst durch Anlegen eines Magnetfeldes magnetisch einheitlich orientiert wird. Im Ergebnis wird durch diesen vorgelagerten Schritt zunächst ein Kunststoffteil erhalten, welches infolge des angelegten Magnetfeldes während der Formung homogen magnetisch orientiert ist, d.h. auf einer Oberfläche durchgängig einen magnetischen Nordpol und auf der entgegengesetzten Oberfläche durchgängig einen magnetischen Südpol aufweist.

Nachdem diese magnetische einheitliche Orientierung bewirkt worden ist, kann in einem zweiten Schritt sodann die bereichsweise Magnetisierung in den Bereichen bewirkt werden, in denen später die Effektlackierung oder Beschriftung oder dergleichen sichtbar werden soll. Die Magnetisierung ist hierbei der zuvor aufgebrachten einheitlichen magnetischen Orientierung entgegengesetzt, so dass in diesen Bereichen eine magnetische Umpolung der das Kunststoffteil ausbildenden thermoplastischen Formmasse bewirkt wird. Wenn anschließend in der bereits beschriebenen Weise der magnetisch orientierbare Partikel enthaltende Lack zur Ausbildung der Lackschicht auf die Oberfläche des geformten Kunststoffteiles aufgebracht wird, orientieren sich die im Lack enthaltenen Partikel entsprechend. Infolge der im vorgelagerten Schritt erfolgten einheitlichen magnetischen Orientierung und der durch die nachfolgende bereichsweise Magnetisierung erfolgten magnetischen Umpolung in den gewünschten Bereichen wird hierbei eine außerordentlich hohe Schärfe der sich im Lack ausbildenden Effektlackierung aufgrund der Agglomeration der magnetisch orientierbaren Partikel im Lack erreicht, die es ermöglicht, auch feinste Beschriftungen auf diese Weise zu erzeugen, da sich die magnetisch umgepolten Bereiche randscharf gegenüber dem entgegengesetzt gerichteten vororientierten verbleibenden Bereich des Kunststoffbauteiles abgrenzen.

Das bereichsweise Anlegen des Magnetfeldes kann auf verschiedene Weise bewirkt werden.

Gemäß einem Vorschlag der Erfindung wird ein magnetischer Stempel eingesetzt, der die gewünschte bereichsweise Magnetisierung des Kunststoffteiles wiederholgenau z.B. bei einer Serienproduktion bewirkt.

Insbesondere bei Einsatz eines zuvor magnetisch einheitlich orientierten Kunststoffteiles ist es jedoch auch möglich, das bereichsweise Anlegen des Magnetfeldes durch einen über die Oberfläche des Kunststoffteiles geführten magnetischen Stift zu bewirken, so dass individuelle, von Hand oder maschinell erstellte Beschriftungen der Oberfläche des Kunststoffteiles nach dem Aufbringen der Lackschicht sichtbar gemacht werden können. Im für die Anwendung des erfindungsgemäßen Verfahrens interessanten Bereich der Herstellung von Gehäusen für Consumer-Produkte kann auf diese Weise beispielsweise eine individuelle Gestaltung nach Art einer Gravur in die Lackoberfläche eingebracht werden, so dass sich völlig neue Arten der Produktindividualisierung ergeben.

Der magnetische Stempel oder Stift können bei Bedarf permanent magnetisch oder auch mittels einer stromdurchflossenen Spule magnetisiert werden, die Auswahl richtet sich nach den jeweiligen Gegebenheiten und ist vom Fachmann entsprechend vorzunehmen.

Es hat sich im Rahmen der Erfindung als vorteilhaft herausgestellt, wenn zur Verstärkung des magnetischen Flusses das bereichsweise Anlegen des Magnetfeldes nach Auflage des zu bearbeitenden Kunststoffteiles auf einer metallischen Unterlage durchgeführt wird.

Gegenstand der Erfindung ist ferner auch ein aus der magnetisierbaren Polymerzusammensetzung hergestellter monofiler Faden, der im Rahmen des erfindungsgemäßen Verfahrens in einem 3D-Drucker zu dem gewünschten und nachfolgend magnetisierten und lackierten Kunststoffteil ausgeformt wird.

Die im Rahmen des erfindungsgemäßen Verfahrens zur Ausbildung von Kunststoffteilen verwendete magnetisierbare Polymerzusammensetzung für den erfindungsgemäßen monofilen Faden ist im Prinzip bekannt und kann je nach Einsatzzweck des herzustellenden Kunststoffteiles aus unterschiedlichsten thermoplastischen Kunststoffen hergestellt sein.

Beispielsweise kann die magnetisierbare Polymerzusammensetzung ein Trägermaterial auf Basis amorpher Kunststoffe, wie Polycarbonat oder Acrylnitril/Butadien/Styrol enthalten. Der Einsatz dieser Trägermaterialien als Formmasse ist beispielsweise für die Herstellung von Gehäusen für Instrumente und Apparate weit verbreitet. Des Weiteren kann die magnetisierbare Polymerzusammensetzung auch Biopolymere, vorzugsweise Polylactide (PLA) umfassen.

Die magnetisierbare Polymerzusammensetzung kann jedoch auch ein Trägermaterial auf Basis teilkristalliner Kunststoffe, wie Polyamid oder Polypropylen enthalten. Letztere haben den Vorteil, dass sie stärker mit magnetisierbaren Partikeln gefüllt werden können, um die magnetischen Eigenschaften zu erreichen.

Es hat sich jedoch im Rahmen der Erfindung gezeigt, dass für die gewünschte Erzielung einer Effektlackierung auch bereits geringe Anteile an magnetisierbaren Füllstoffen im Trägermaterial ausreichen, um den Lackauftrag mit einer magnetisch orientierbare Partikel enthaltenden Lackschicht entsprechend zu orientieren, so dass auch die Anwendung eines Trägermaterials auf Basis amorpher Kunststoffe in Betracht kommt.

Als magnetisierbare Partikel werden bevorzugt Ferritpartikel eingesetzt, und zwar in einer Menge von 5 bis 40 Gew.-% bezogen auf das Trägermaterial. Wenn die Menge an Ferritpartikeln unter 5 Gew.-% liegt, so ist unter Umständen die erzielbare Magnetisierung des Kunststoffteiles nicht stark genug, um die gewünschte Orientierung des Lackes zu erreichen.

Andererseits verteuert ein Anteil an Ferritpartikel über 40 Gew.-% unangemessen die Rohstoffkosten des nach dem erfindungsgemäßen Verfahren erhältlichen Kunststoffteiles.

Die Auswahl der verwendeten Ferritpartikel unterliegt keiner generellen Beschränkung, jedoch werden bevorzugt High-Energy-Ferritpartikel mit einer Dichte von 5,0 bis 5,2 g/cm3 und einer durchschnittlichen Partikelgröße von 1,5 bis 2,5 µm eingesetzt.

Die Ferritpartikel weisen ferner bevorzugt eine Remanenz von 155 bis 180 mT und eine intrinsische Koerzivität von 155 bis 250 kA/m auf.

Der Dimensionierung des monofilen Fadens sind keine generellen Beschränkungen auferlegt, vielmehr wird dieser anhand der vom verwendeten 3D-Drucker geforderten Spezifikation gefertigt, d.h. insbesondere mit entsprechendem Durchmesser ausgeführt. Derartige Durchmesser liegen z.B. in einem Bereich zwischen 1,5 und 2,0 mm, jedoch sind auch abweichende Durchmesser möglich.

Unter einem monofilen Faden im Sinne der Erfindung werden sowohl auf Spulen o. dgl. aufspulbare größere Längenabschnitte wie auch kurze, eher stabförmige Abschnitte eines Monofils verstanden.

Der zur Ausbildung der Lackschicht verwendete magnetisch orientierbare Partikel enthaltende Lack ist handelsüblich erhältlich, wobei aufgrund der Feinheit der verwendeten magnetisierbaren Partikel sogenannter Nanolack mit Partikelgrößen im Nanometerbereich bevorzugt ist. Die Partikel können beispielsweise aus Eisenoxid, Eisen, Nickel, Kobalt oder Legierungen derselben hergestellt sein.

Es versteht sich, dass nach dem Aufbringen der magnetisch orientierbare Partikel enthaltenden Lackschicht gegebenenfalls auch noch weitere Lackschichten auf das erfindungsgemäß herstellbare Kunststoffteil aufgebracht werden können.

Weiterhin ist es insbesondere für die Herstellung von Gehäuseteilen für elektronische Geräte, wie Mobiltelefone, von besonderem Vorteil, wenn das Kunststoffteil nach dem Aufbringen und Trocknen der Lackschicht entmagnetisiert wird. Das Entmagnetisieren beeinträchtigt die erzielte Effektlackierung nicht mehr, da die zuvor aufgrund des Magnetfeldes orientierten magnetisierbaren Partikel nach dem Trocknen der Lackschicht nicht mehr beweglich sind, so dass die Effektlackierung dauerhaft verbleibt, auch wenn eine Entmagnetisierung durchgeführt wird.

Je nach Wahl des verwendeten Kunststoffes und dem Gehalt an magnetisierbaren Partikeln im Kunststoffteil kann gleichzeitig auch eine gewünschte elektromagnetische Abschirmung für ein Gerät erzeugt werden.

Die Erfindung ermöglicht auch eine neuartige Gestaltungsmöglichkeit im Hobby- und Heimbereich, wenn gewünschte Kunststoffteile nahezu beliebiger Form mit einer Effektlackierung versehen werden. Beispielsweise kann ein Set bestehend aus dem magnetisierbaren monofilen Faden für die Verarbeitung in einem handelsüblichen 3D-Drucker, ein Magnetisierstift und ein Behälter mit der Lackschicht vorgesehen werden, um auch im Heim- und Hobbybereich die Vorteile des erfindungsgemäßen Verfahrens nutzbar zu machen.

## Patentansprüche

1. Verfahren zur Herstellung von Kunststoffteilen mit lackierter Oberfläche, wobei das Kunststoffteil aus einer thermoplastischen Formmasse geformt und nachfolgend eine Lackschicht auf die Oberfläche des Kunststoffteiles aufgebracht wird und wobei als thermoplastische Formmasse eine magnetisierbare Polymerzusammensetzung eingesetzt ist und die Formmasse während oder nach der Formung des Kunststoffteiles bereichsweise durch Anlegen eines Magnetfeldes magnetisiert wird und in einem nachfolgenden Schritt ein magnetisch orientierbare Partikel enthaltender Lack zur Ausbildung der Lackschicht auf die Oberfläche des geformten Kunststoffteiles aufgebracht wird, **dadurch gekennzeichnet, dass** aus der thermischen Formmasse zunächst ein magnetisierbarer monofiler Faden extrudiert wird und der Faden in einem 3D-Drucker zu dem Kunststoffteil geformt wird und die Formmasse während der Formung des Kunststoffteiles durch Anlegen eines Magnetfeldes zunächst magnetisch einheitlich orientiert wird und nachfolgend durch Anlegen eines entgegengerichteten Magnetfeldes bereichsweise in umgekehrter Orientierung magnetisiert wird und danach die Lackschicht auf die Oberfläche des geformten Kunststoffteiles aufgebracht wird.

2. Verfahren nach Anspruch 1, **dadurch gekennzeichnet, dass** das bereichsweise Anlegen des Magnetfeldes mittels eines magnetischen Stempels erfolgt.

3. Verfahren nach Anspruch 1, **dadurch gekennzeichnet, dass** das bereichsweise Anlegen des Magnetfeldes durch einen über die Oberfläche des Kunststoffteiles geführten magnetischen Stift erfolgt.

4. Verfahren nach einem der Ansprüche 2 oder 3, **dadurch gekennzeichnet, dass** der magnetische Stempel oder Stift permanentmagnetisch oder mittels einer Spule magnetisiert ist.

5. Verfahren nach einem der Ansprüche 1 bis 4, **dadurch gekennzeichnet, dass** das Kunststoffteil beim Anlegen des Magnetfeldes auf eine metallische Unterlage aufgebracht wird.

6. Verfahren nach einem der Ansprüche 1 bis 5, **dadurch gekennzeichnet, dass** die magnetisierbare Polymerzusammensetzung ein Trägermaterial auf Basis amorpher Kunststoffe, wie Polycarbonat oder Acrynitril/Butadien/Styrol enthält.

7. Verfahren nach einem der Ansprüche 1 bis 5, **dadurch gekennzeichnet, dass** die magnetisierbare Polymerzusammensetzung ein Trägermaterial auf Basis teilkristalliner Kunststoffe, wie Polyamid oder Polypropylen oder auf Basis eines Biopolymers, wie eines Polylactids enthält.

8. Verfahren nach einem der Ansprüche 1 bis 7, **dadurch gekennzeichnet, dass** die magnetisierbare Polymerzusammensetzung Ferritpartikel in einer Menge von 5 bis 40 Gew.-% bezogen auf das Trägermaterial enthält.

9. Verfahren nach Anspruch 8, **dadurch gekennzeichnet, dass** High-Energy-Ferrit-Partikel mit einer Dichte von 5,0 bis 5,2 g/cm3 und einer durchschnittlichen Partikelgröße von 1,5 bis 2,5 µm eingesetzt werden.

10. Verfahren nach Anspruch 8 oder 9, **dadurch gekennzeichnet, dass** die Ferritpartikel eine Remanenz von 155 bis 180 mT und eine intrinsische Koerzivität von 155 bis 250 kA/m aufweisen.

11. Verfahren nach einem der Ansprüche 1 bis 10, **dadurch gekennzeichnet, dass** das Kunststoffteil nach dem Aufbringen und Trocknen der Lackschicht entmagnetisiert wird.

12. Monofiler Faden zur Verwendung in einem Verfahren gemäß den Patentansprüchen 1 bis 11, gebildet aus einer magnetisierbaren Polymerzusammensetzung, bei der High-Energy-Ferrit-Partikel mit einer Dichte von 5,0 bis 5,2 g/cm3 und einer durchschnittlichen Partikelgröße von 1,5 bis 2,5 µm eingesetzt werden.

13. Monofiler Faden nach Anspruch 12, **dadurch gekennzeichnet, dass** die Ferritpartikel eine Remanenz von 155 bis 180 mT und eine intrinsische Koerzivität von 155 bis 250 kA/m aufweisen.

14. Verwendung eines nach den Ansprüchen 1 bis 11 hergestellten Kunststoffteiles als Dekorteil für ein Maschinen- oder Apparategehäuse.

## Claims

1. Method for producing plastic parts with a coated surface, wherein the plastic part is formed from a thermoplastic moulding compound and then a coating layer is applied onto the surface of the plastic part, and wherein as a thermoplastic moulding compound a magnetisable polymer composition is used and the moulding compound is magnetised during or after the formation of the plastic part partly by application of a magnetic field and in a following step a coating containing magnetically orientable particles is applied to form the coating layer on the surface of the formed plastic part, **characterised in that** from the thermal moulding compound firstly a magnetisable monofilament thread is extruded and the thread is formed into the plastic part in a 3D-printer and the moulding compound is firstly oriented uniformly magnetically during the formation of the plastic part by applying a magnetic field and is then magnetised by the application of an opposing magnetic field partly with reverse orientation and then the coating layer is applied onto the surface of the formed plastic part.

2. Method according to claim 1, **characterised in that** the partial application of the magnetic field is performed by means of a magnetic stamp.

3. Method according to claim 1, **characterised in that** the partial application of the magnetic field is performed by a magnetic pin guided over the surface of the plastic part.

4. Method according to any of claims 2 or 3, **characterised in that** the magnetic stamp or pin is magnetised by a permanent magnet or by means of a coil.

5. Method according to any of claims 1 to 4, **characterised in that** for the application of the magnetic field the plastic part is placed onto a metal base.

6. Method according to any of claims 1 to 5, **characterised in that** the magnetisable polymer composition contains a substrate material with a base of amorphous plastics, such as polycarbonate or acrylonitrile butadiene styrene.

7. Method according to any of claims 1 to 5, **characterised in that** the magnetisable polymer composition contains a substrate material with a base of semi-crystalline plastics, such as polyamide or polypropylene or with a base of a biopolymer, such as a polylactide.

8. Method according to any of claims 1 to 7, **characterised in that** the magnetisable polymer composition contains ferrite particles in an amount of 5 to 40 wt.% relative to the substrate material.

9. Method according to claim 8, **characterised in that** high-energy ferrite particles are used with a density of 5.0 to 5.2 g/cm³ and an average particle size of 1.5 to 2.5 µm.

10. Method according to claim 8 or 9, **characterised in that** the ferrite particles have a remanence of 155 to 180 mT and an intrinsic coercivity of 155 to 250 kA/m.

11. Method according to any of claims 1 to 10, **characterised in that** the plastic part is demagnetised after the application and drying of the coating layer.

12. Monofilament thread for use in a method according to claims 1 to 11, formed by a magnetisable polymer composition, in which high-energy ferrite particles are used with a density of 5.0 to 5.2 g/cm³ and an average particle size of 1.5 to 2.5 µm.

13. Monofilament thread according to claim 12, **characterised in that** the ferrite particles have a remanence of 155 to 180 mT and an intrinsic coercivity of 155 to 250 kA/m.

14. Use of a plastic part produced according to claims 1 to 11 as a decorative part for a machine or apparatus housing.

## Revendications

1. Procédé de fabrication de pièces en matière plastique avec une surface vernie, dans lequel la pièce de matière plastique est moulée dans une matière thermoplastique moulable et une couche de vernis est ensuite appliquée sur la surface de la pièce de matière plastique et dans lequel on utilise comme matière thermoplastique moulable une composition polymère magnétisable et la matière moulable est magnétisée pendant ou après le moulage de la pièce de matière plastique par zones en appliquant un champ magnétique et, dans une étape suivante, un vernis contenant des particules magnétiquement orientables est appliquée sur la surface de la pièce de matière plastique moulée pour former la couche de vernis, **caractérisé en ce que** l'on extrude tout d'abord un fil monofilamentaire magnétisable de la matière thermique moulable et le fil est moulé dans la pièce de matière plastique dans une imprimante 3D et la matière moulable est tout d'abord orientée magnétiquement uniformément par application d'un champ magnétique au cours du moulage de la pièce de matière plastique et est ensuite magnétisée par application d'un champ magnétique de sens opposé par zones en orientation inverse, puis la couche de vernis est appliquée sur la surface de la pièce de matière plastique moulée.

2. Procédé selon la revendication 1, **caractérisé en ce que** l'application par zones du champ magnétique se fait au moyen d'un timbre magnétique.

3. Procédé selon la revendication 1, **caractérisé en ce que** l'application par zones du champ magnétique se fait par une broche magnétique guidée sur la surface de la pièce de matière plastique.

4. Procédé selon l'une quelconque des revendications 2 ou 3, **caractérisé en ce que** le timbre ou la broche magnétique est magnétique en permanence ou magnétisé(e) au moyen d'une bobine.

5. Procédé selon l'une quelconque des revendications 1 à 4, **caractérisé en ce que** la pièce de matière plastique est appliquée sur un support métallique lors de l'établissement du champ magnétique.

6. Procédé selon l'une quelconque des revendications 1 à 5, **caractérisé en ce que** la composition polymère magnétisable contient un matériau de support à base de matières plastiques amorphes, telles qu'un polycarbonate ou un copolymère d'acrylonitrile/butadiène/styrène.

7. Procédé selon l'une quelconque des revendications 1 à 5, **caractérisé en ce que** la composition polymère magnétisable contient un matériau de support à base de matières plastiques en partie cristallines, telles qu'un polyamide ou un polypropylène ou à base d'un polymère biologique tel qu'un polylactide.

8. Procédé selon l'une quelconque des revendications 1 à 7, **caractérisé en ce que** la composition polymère magnétisable contient des particules de ferrite en quantité de 5 à 40 % en poids par rapport au matériau de support.

9. Procédé selon la revendication 8, **caractérisé en ce que** l'on utilise des particules de ferrite de haute énergie avec un poids spécifique de 5,0 à 5,2 g/cm³ et une taille particulaire moyenne de 1,5 à 2,5 µm.

10. Procédé selon la revendication 8 ou 9, **caractérisé en ce que** les particules de ferrite présentent une rémanence de 155 à 180 mT et une force coercitive de 155 à 250 kA/m.

11. Procédé selon l'une quelconque des revendications 1 à 10, **caractérisé en ce que** la pièce de matière plastique est démagnétisée après l'application et le séchage de la couche de vernis.

12. Fil monofilamentaire pour utilisation dans un procédé selon les revendications 1 à 11, formé d'une composition polymère magnétisable, dans laquelle on utilise des particules de ferrite de haute énergie avec un poids spécifique de 5,0 à 5,2 g/cm³ et une taille particulaire moyenne de 1,5 à 2,5 µm.

13. Fil monofilamentaire selon la revendication 12, **caractérisé en ce que** les particules de ferrite présentent une rémanence de 155 à 180 mT et une force coercitive de 155 à 250 kA/m.

14. Utilisation d'une pièce de matière plastique fabriquée selon les revendications 1 à 11 comme pièce de décoration pour boîtiers de machines et d'appareils.
